# FASCICULE DE BREVET EUROPEEN

(11) **EP 1 477 259 B1**
(45) Date de publication et mention de la délivrance du brevet: **14.03.2007**
(21) Numéro de dépôt: 04076374.0
(22) Date de dépôt: 07.05.2004
(51) Int. Cl.: B23K 5/24, B23K 7/10, F23D 14/38, F23Q 3/00

(54) **Economiseur de gaz avec allumeur automatique et contrôle pour chalumeau oxygène-gaz**
Gas-Economiser with automatic ignition and control for oxygen-gas burners
Gassparer mit automatischer Zündung und Kontrol für Oxygen-Gas-Brenner

(30) Priorité: 12.05.2003 IT mi20030227 U
(43) Date de publication de la demande: 17.11.2004
(73) Titulaire: L'air Liquide, S.A. à Directoire et Conseil de Surveillance pour l'Etude et l'Exploitation des Procédés Georges Claude, 75321 Paris Cedex 07 (FR); Air Liquide Italia S.p.A., 20148 Milano (IT)
(72) Inventeur: Adami, Fabrizio, 37139 Verona (IT); Del Corso, Gianfabio, 19100 Biella (IT); Mischi, Silvano, 37139 Verona (IT)
(74) Mandataire: Pittis, Olivier

(56) Documents cités:
- DE-A- 19 521 095
- GB-A- 1 435 586
- PATENT ABSTRACTS OF JAPAN vol. 0061, no. 06 (M-213), 10 mai 1983 (1983-05-10) & JP 58 028924 A (HITACHI SEISAKUSHO KK), 21 février 1983 (1983-02-21)
- DATABASE WPI Section Ch, Week 197844 Derwent Publications Ltd., London, GB; Class M23, AN 1978-79505A XP002294921 & SU 583 882 A (KALASHNIKOV B F) 15 décembre 1977 (1977-12-15)

## Description

L'objet de la présente invention est un économiseur de gaz pour dispositif avec chalumeau oxy-gaz pour applications à la flamme, de soudage, de réchauffage, etc... selon le préambule de la revendication (voir, par exemple, JP-A-58/028924).

Sont déjà connus les économiseurs de gaz, par exemple, pour dispositif de soudage dont le but est de permettre l'extinction de la flamme d'un chalumeau de soudage auquel il est relié, lorsque celui-ci vient appuyer sur un support adéquat s'activant par un corps de l'économiseur et sans intervenir sur la régulation des gaz (par exemple oxygène ou acétylène) formant le gaz de soudage qui arrive au chalumeau. Un tel support, généralement mobile, est associé fonctionnellement à un organe (mécanique) pour interrompre l'envoi de gaz au chalumeau lorsque ce dernier vient appuyer sur le support.

Au corps d'économiseur est par ailleurs associé un brûleur duquel est expulsé vers l'extérieur une flamme pilote, allumée en permanence, qui permet le ré-allumage du chalumeau lorsque celui-ci est soulevé du levier et approché de ladite flamme pilote.

Une telle solution connue a l'inconvénient de prévoir que la flamme pilote soit toujours active et alimentée en gaz, avec consommation conséquente de gaz et problèmes possibles liés à la sécurité des opérateurs proche de l'économiseur.

Par ailleurs, le document JP-A-58 028924 décrit un dispositif d'allumage automatique pour chalumeau de soudage à gaz selon lequel un bouton-poussoir agencé sur le corps du chalumeau sert, lorsqu'il est activé par l'opérateur, à générer des étincelles au moyen d'un système d'allumage comprenant notamment un moteur et un ressort accumulateur d'énergie, de manière à enflammer le gaz alimentant le chalumeau.

En outre, le document GB-A-1435586 enseigne une amélioration de système d'allumage d'un brûleur à fuel.

Le but de la présente invention est de proposer un économiseur de gaz pour dispositif de soudage manuel et autres applications similaires avec chalumeau oxy-gaz qui offre une plus grande simplicité et une sécurité d'emploi pour les utilisateurs.

Un autre but est de proposer un économiseur de gaz qui soit d'emploi fiable.

Ceux-ci et d'autres buts qui seront évidents pour l'homme du métier, sont atteints par un économiseur de gaz pour dispositif de soudage ou analogues selon a revendication 1.

Pour une meilleure compréhension de la présente invention, on joint, à titre purement indicatif, les dessins suivants où :
- la figure 1 représente une vue frontale d'un économiseur selon l'invention;
- la figure 2 représente une vue latérale de l'économiseur de la figure 1 ; et
- la figure 3 représente un schéma circuitaire de l'économiseur de la figure 1.

En référence aux figures mentionnées, un économiseur selon l'invention comprend un corps en caisson 1, intérieurement creux et pourvu d'un portillon mobile 2 pour permettre l'accès à l'intérieur du corps 1. Ce corps est préférentiellement fixé sur un support (non montré) qui le soutient.

Sur un côté 1A de ce dernier, fait saillie une colonne 3 ; sur un côté 4 de ce dernier dépasse un support pour un chalumeau oxy-gaz 30 par exemple de soudage. Dans le mode de réalisation représenté sur les figures, le support 5 comprend un élément 6 mobile par rapport à une partie fixe 7 solidaire de la colonne 3, à laquelle il est relié par une de ses extrémités 8, et pour supporter directement le chalumeau 30. Cet élément mobile 6 coopère avec un micro-interrupteur 10 porté par la partie fixe 7.

L'élément mobile 6 comprend une extrémité 6A conformée de manière à supporter une partie d'extrémité 30A du chalumeau 30. Sur cette extrémité 6A, peut être superposée un bras mobile (non montré) agissant pour retenir, avec cette extrémité, la partie 30A du chalumeau.

A une extrémité 11 de la colonne 3 (ou en relation avec une autre de ses parties qui convient) est présent un générateur d'étincelles définissant un organe d'allumage 13 du gaz envoyé à l'extérieur par le chalumeau. Cet organe est, par exemple, un élément connu piézoélectrique.

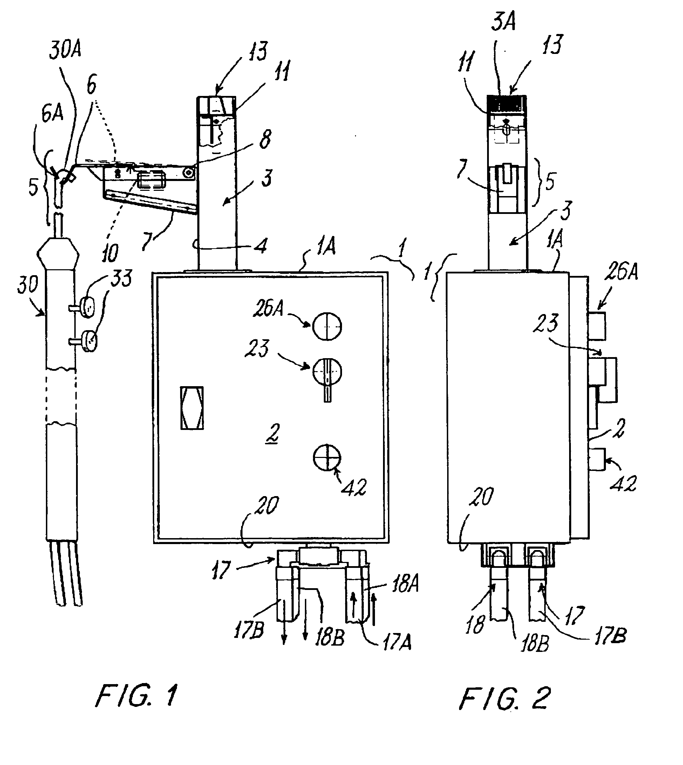

Pour la colonne 3, montrée avec support 5 retourné vers le côté gauche (avec renvoi à la figure 1) du corps 1, il est prévu la possibilité d'une rotation, par exemple de 45° en 45°, par rapport à ce corps. Ceci est obtenu en prévoyant sur ladite colonne et le côté 1A du corps 1, des sites espacés pour des éléments de fixation (par exemple des vis) qui viennent se coupler auxdits sites respectifs en fonction de la position relative désirée de la colonne 3 et du corps 1.

L'organe d'allumage 13 présente une pluralité d'électrodes 13A protégées par une grille 3A située à l'extrémité 11 de la colonne 3.

Dans le corps 1 est présent un circuit électrique auquel sont connectés l'organe 13 et les micro-interrupteurs 10, non seulement les électrovannes 14 et 15 reliées aux connecteurs 17 et 18 respectivement pour les conduits d'oxygène (ou autre gaz comburant) et de gaz combustible (par exemple l'acétylène ou similaire).

En particulier, le connecteur 17 (et l'électrovanne respective 14) est connecté à un conduit 17A pour l'amenée d'oxygène et à un conduit de sortie ou d'utilisation 17B pour l'envoi de cet oxygène au chalumeau 30. Le connecteur 18 (et l'électrovanne 15 respective) est connecté à un conduit 18A pour l'alimentation en gaz combustible et à un conduit de sortie ou d'alimentation 18B pour l'envoi de ce gaz au chalumeau 30. Dans ce dernier, les gaz se mélangent pour former le gaz d'application utilisé pour les applications à la flamme. Les conduits d'oxygène et de gaz combustible, encore séparés, dans le chalumeau 30 sont dotés de valves propres actionnables par l'intermédiaire des boutons 33 présents sur l'extérieur du chalumeau. Les connecteurs 17 et 18 sont agencés extérieurement au corps 1 en correspondance avec son côté 20.

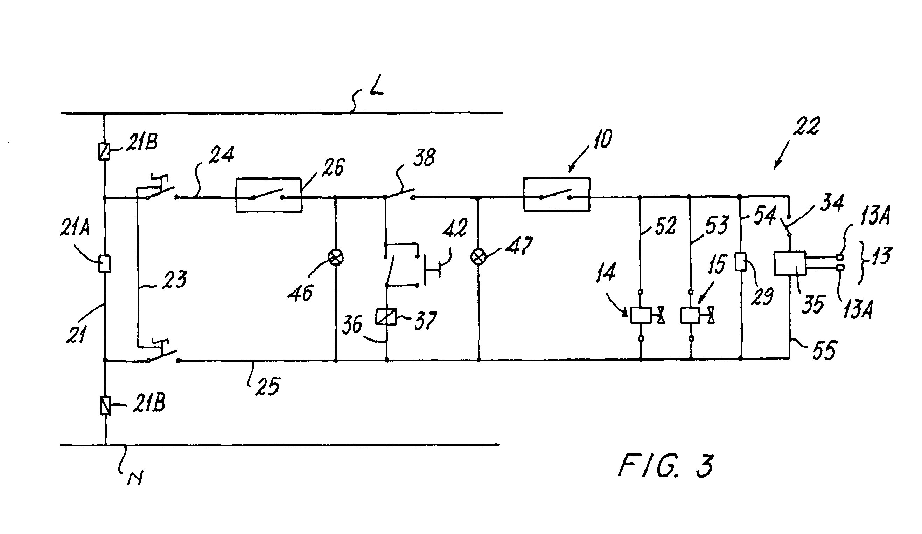

Ledit circuit électrique, auquel sont connectés aussi les électrovannes 14 et 15, est représenté sur la figure 3 où il est désigné par 22. Celui-ci comprend un interrupteur principal a levier ON-OFF 23 agencé sur l'extérieur de la porte 2 et relié à des lignes électriques 24 et 25. Ces lignes se relient, par l'intermédiaire d'une branche électrique 21 agencée en amont de l'interrupteur 23, à un réseau d'alimentation fixe désigné, en figure 3, par les lignes L et N. Sur le réseau électrique 21 sont agencés un filtre capacitif anti-parasite 21A et des fusibles 21B. Sur la ligne électrique 24 est située un interrupteur 26 (actionnable via un poussoir aménagé sur le portillon 2 où est indiqué 26A) faisant fonction d'élément de sécurité pour couper ou activer le circuit, malgré que ce dernier soit maintenu alimenté électriquement par un réseau d'alimentation externe via la fermeture de l'interrupteur principal 23. En cas d'extinction accidentelle de la flamme du chalumeau, ce qui engendre la survenance d'un cas d'urgence, via un actionnement de l'interrupteur 26, on interrompt rapidement l'alimentation électrique de la partie de circuit en aval de cet interrupteur, partie où se trouvent les électrovannes 14 et 15 et, seulement ensuite, on peut réactiver cette alimentation (tant que l'interrupteur principal 23 reste fermé) par activation successive aussi de l'organe d'allumage 13.

Sur la ligne 24 est par ailleurs présent un interrupteur ultérieur 58 commandé par un relais 37 agencé sur la ligne 36 en parallèle des lignes électriques 52, 53 alimentant les électrovannes 14 et 15. Le relais vient est activé en agissant sur un poussoir 42 situé sur la trappe 2, laquelle pression (ou, de toute manière, l'activation) active le fonctionnement de l'économiseur 1. Le relais 37 est un relais de retenue.

En parallèle avec la ligne 36 sont agencées des lignes alimentant des voyants indicateurs 46 et 47, le premier connecté aux lignes 24 et 25 en amont de l'interrupteur 38.

En aval de l'interrupteur 38, aux lignes 24 et 25 se relient, en parallèle entre elles et avec la ligne 36, les lignes électriques 52, 53 et une ligne 54 sur laquelle est agencée une temporisation 29 commandant un interrupteur 34 agencé sur une ligne 55 sur laquelle est agencé par ailleurs un transformateur à haute tension 35 relié aux électrodes 13A de l'organe d'allumage 13.

Pendant l'utilisation, par exemple pour réaliser une soudure, en supposant les interrupteurs 23 et 26 fermés, lorsque le chalumeau est posé sur le support 5, le micro-interrupteur 10 est ouvert et donc ni le temporisateur 29, ni les électrovannes 14 et 15 ne sont alimentées électriquement. En soulevant le chalumeau du support 5, le micro-interrupteur 10 se ferme en alimentant les électrovannes 14 et 15 et le temporisateur 29 susmentionnés. Ceci fournit alimentation du gaz au chalumeau (c'est-à-dire l'alimentation par exemple en oxygène et acétylène ou propane ou d'autre gaz similaire au chalumeau), dans ce dernier, les vannes étant opportunément actionnées par les boutons 33. Concomitamment, le temporisateur 29 ferme l'interrupteur 34 de manière à alimenter, pendant une durée préfixée et réglable, par exemple de 5 à 1 0 secondes, le transformateur 35 en activant ainsi l'organe d'allumage 13. En approchant de celui-ci la partie terminale 30A du chalumeau 30 duquel sort le gaz d'application (par exemple de soudage), ce dernier prend feu.

Après un laps de temps préfixé et nécessaire pour réaliser l'allumage du chalumeau (par exemple 5-10 secondes), le temporisateur ouvre l'interrupteur 34, en interrompant la génération d'étincelles de la part de l'organe d'allumage 13.

Dans le cas où il y a un raté d'allumage de la flamme, le chalumeau va reposer sur le support 5 en mode de réouverture du micro-interrupteur 10, son soulèvement successif referme ce micro-interrupteur en reproduisant, avec les modalités décrites, l'envoi vers l'extérieur du gaz d'application par le chalumeau 30 et la génération d'étincelles de l'allumeur 13.

A la fin de l'opération de soudage, en posant le chalumeau sur son support 5, on ouvre le micro-interrupteur 10 en aboutissant ainsi à la fermeture des électrovannes 14 et 15 en permettant donc la désactivation du circuit 22 via l'interrupteur 23. Les vannes associées au chalumeau 30 ne sont pas actionnées et restent prédisposées pour alimenter, en quantité requise, oxygène et gaz combustible à la partie terminale 30A du chalumeau 30. Si l'opération de soudage se termine totalement, l'interrupteur principal 23 vient aussi à s'ouvrir en désactivant le circuit 22.

On a décrit un mode préféré de l'invention. D'autres modes sont encore possibles à partir de la description précédente. Par exemple, on peut prévoir l'organe d'allumage 13 agencé à un autre endroit sur le corps 1 éventuellement associé à un élément portant qui ne supporte pas directement le support du chalumeau 5.

En outre, l'économiseur de gaz peut comprendre un élément temporisateur agissant pour modifier le temps d'ouverture relatif des électrovannes 14 et 15, par exemple en anticipant ou en retardant l'ouverture et la fermeture de l'électrovanne 15 agencée sur le conduit des gaz de soudage ou d'oxygène présents. L'économiseur peut enfin opérer avec de l'air comprimé au lieu de l'oxygène, ou bien peut comprendre aussi un conduit de décharge à l'extérieur des gaz circulant dans les conduits sur lesquels sont positionnées les électrovannes 14 et 15, et la possibilité d'introduire de l'azote dans lesdits conduits en cas d'urgence.

## Revendications

1. Economiseur de gaz pour dispositif avec chalumeau oxy-gaz pour applications à la flamme, tels que une soudure, un réchauffage ou similaire, ledit économiseur comprenant un corps (1) auquel sont associés des organes de connexion pour conduits d'amenée de gaz comburant, tel que l'oxygène, et de gaz combustible, tel que l'acétylène ou similaire, et pour conduits d'alimentation (17B, 18B) pour la sortie desdits gaz vers un chalumeau (30) de manière à expulser une flamme provoquée par l'allumage d'un gaz d'application formé dans le chalumeau (30) par mélange des gaz susmentionnés issus desdits conduits d'alimentation, audit corps (1) étant fixé un support (5) présentant un élément mobile (6) de manière à servir d'organe de commande de l'alimentation en lesdits gaz dudit chalumeau (30), **caractérisé en ce que** :
- au corps (1) de l'économiseur est associé un organe d'allumage (13) commandé par l'élément mobile (6), ledit organe d'allumage (13) s'activant, pour une période de temps prédéterminée, lorsque le chalumeau vient à être retiré dudit support (5) afin d'allumer le gaz d'application sortant vers l'extérieur,
- l'organe d'allumage (13) est un générateur d'étincelles, et l'économiseur comprend un générateur de haute tension (35) avec des lignes (55) électriques d'alimentation, un circuit d'alimentation (22) associé au corps (1) de l'économiseur, un interrupteur (34) agencé sur une des lignes (55) d'alimentation dudit générateur (35), une temporisation agencée sur une branche électrique (54) dudit circuit d'alimentation (22) et un interrupteur connecté fonctionnellement à l'élément mobile du support du chalumeau, ladite temporisation (29) étant en aval de l'interrupteur (10) connecté fonctionnellement à l'élément mobile (6)
- l'organe d'allumage (13) est connecté au générateur de haute tension (35) relié par le circuit d'alimentation électrique (22) ladite liaison étant interrompue via l'interrupteur (34) agencé sur la ligne électrique d'alimentation (55) dudit générateur (35), ledit interrupteur (34) étant commandé par la temporisation (29).

2. Economiseur de gaz selon la revendication 1, **caractérisé en ce que** le circuit d'alimentation comprend des branches électriques (52, 53) où sont agencés des électrovannes (14, 15) reliées auxdits organes de connexion (17, 18), lesdits organes de connexion (17, 18) étant extérieurs au corps de l'économiseur.

3. Economiseur de gaz selon la revendication 1, **caractérisé en ce que** le circuit d'alimentation (22) comprend un interrupteur d'alimentation principal (23) et, en aval de celui-ci, un interrupteur de sécurité (26) agencé en amont de l'interrupteur (10) connecté fonctionnellement à l'élément mobile (6) du support (5) de chalumeau (30).

4. Economiseur de gaz selon la revendication 1, **caractérisé en ce que** le circuit d'alimentation (22) comprend un organe temporisateur pour différencier temporellement l'intervention desdites électrovannes (14,15) sur les conduits respectifs auxquels ils sont reliés.

5. Economiseur de gaz selon la revendication 1, **caractérisé en ce que** l'organe d'allumage (13) et ledit support (5) de chalumeau (30) sont associés à une même partie (3) du corps (1) de l'économiseur.

6. Economiseur de gaz selon la revendication 1, **caractérisé en ce que** l'organe d'allumage (13) est associé de manière autonome au corps (1) de l'économiseur par rapport au support de chalumeau.

7. Economiseur de gaz selon la revendication 1, **caractérisé en ce que** la partie (3) à laquelle sont associés l'organe d'allumage (13) et ledit support (5) de chalumeau (30) est mobile par rapport au corps (1) de l'économiseur.

8. Economiseur de gaz selon la revendication 1, **caractérisé en ce que** le corps (1) de l'économiseur comprend un conduit de décharge vers l'extérieur des gaz circulants dans les conduits sur lesquels sont agencées les électrovannes (14,15).

9. Economiseur de gaz selon la revendication 1, **caractérisé en ce que** le corps (1) est un caisson, intérieurement creux, et présente une trappe mobile (2) de fermeture de sa cavité.

10. Economiseur de gaz selon les revendications 3 à 9, **caractérisé en ce qu'**extérieurement au corps en caisson (1) ou de sa trappe sont agencés l'interrupteur principal (23) et celui de sécurité (26).

## Claims

1. Gas economizer for a device with an oxy-gas torch for flame applications such as welding, heating or the like, said economizer comprising a body (1) to which connecting devices are associated for lines supplying an oxidizing gas such as oxygen and a fuel gas such as acetylene or the like, and for supply lines (17B, 18B) for leading out said gases to a torch (30) so as to expel a flame produced by the ignition of an application gas formed in the torch (30) by mixing the abovementioned gases coming from said supply lines, a support (5) having a movable element (6) being fixed to said body (1) so as to serve as a device controlling the supply of said gases of said torch (30),
**characterized in that**:
- an ignition device (13) controlled by the movable element (6) is associated with the body (1) of the economizer, said ignition device (13) being activated, for a predetermined period of time, when the torch has just been removed from said support (5) in order to ignite the application gas leaving outwards,
- the ignition device (13) is a spark generator, and the economizer comprises a high voltage generator (35) with electric supply lines (55), a supply circuit (22) associated with the body (1) of the economizer, a switch (34) arranged on one of the supply lines (55) of said generator (35), a timer arranged on an electrical branch (54) of said supply circuit (22) and a switch functionally connected to the movable element of the support of the torch, said timer (29) being downstream to the switch (10) functionally connected to the movable element (6).
- the ignition device (13) is connected to the high voltage generator (35) connected by the electrical supply circuit (22), said connection being broken by the switch (34) arranged on the electrical supply line (55) of said generator (35), said switch (34) being controlled by the timer (29).

2. Gas economizer according to claim 1, **characterized in that** the supply circuit includes electrical branches (52, 53) where solenoid valves (14, 15) are arranged, connected to said connecting devices (17, 18), said connecting devices (17, 18) being outside the body of the economizer.

3. Gas economizer according to claim 1 **characterised in that** the supply circuit (22) includes a main supply switch (23) and, downstream thereof, a safety switch (26) arranged upstream to the switch (10) functionally connected to the moveable element (6) of the support (5) of the torch (30).

4. Gas economizer according to claim 1, **characterised in that** the supply circuit (22) includes a timer device for differentiating in time the operation of said solenoid valves (14,15) on the respective lines to which they are connected.

5. Gas economizer according to claim 1, **characterised in that** the ignition device (13) and said support (5) of the torch (30) are associated with the same part (3) of the body (1) of the economizer.

6. Gas economizer according to claim 1, **characterised in that** the ignition device (13) is associated in an autonomous manner with the body (1) of the economizer with respect to the torch support.

7. Gas economizer according to claim 1, **characterised in that** the part (3) to which the ignition device (13) and said support (5) of the torch (30) are associated is moveable with respect to the body (1) of the economizer.

8. Gas economizer according to claim 1, **characterised in that** the body (1) of the economizer includes a discharge line to the outside for gases circulating in the lines on which the solenoid valve (14,15) are arranged.

9. Gas economizer according to claim 1, **characterised in that** the body (1) is a casing, hollow inside, and has a moveable door (2) for closing its cavity.

10. Gas economizer according to claims 3 to 9, **characterised in that** the principal switch (23) and the safety switch (26) are arranged outside the body of the casing (1) or of its door.

## Patentansprüche

1. Gassparer für Vorrichtung mit Sauerstoffbrenner für Anwendungen mit der Flamme, wie zum Beispiel ein Schweißen, ein Erhitzen oder Ähnliches, wobei der Gassparer einen Körper (1) aufweist, mit dem Anschlussorgane für Zuführleitungen für verbrennungsförderndes Gas, wie zum Beispiel Sauerstoff, und Brenngas, wie zum Beispiel Acetylen oder Ähnliches verbunden sind, und für Versorgungsleitungen (17B, 18B) für den Ausgang der Gase zu einem Brenner (30), so dass eine Flamme ausgeworfen wird, die von dem Zünden eines Anwendungsgases, das in dem Brenner (30) durch Mischen der oben genannten Gase, die aus den Zuführleitungen stammen, gebildet wird, hervorgerufen wird, wobei an dem Körper (1) ein Träger (5) befestigt ist, der ein Element (6) aufweist, das so beweglich ist, dass es als Steuerorgan der Versorgung mit den Gasen des Brenners (30) dienen kann, **dadurch gekennzeichnet, dass**
- mit dem Körper (1) des Gassparers ein Zündorgan (13), das von dem beweglichen Element (6) gesteuert wird, verbunden ist, wobei sich das Zündorgan (13) während einer vorbestimmten Zeitspanne aktiviert, wenn der Brenner von dem Träger (5) genommen wird, um das Anwendungsgas, das nach außen austritt, zu zünden,
- das Zündorgan (13) ein Funkengenerator ist, und dass der Gassparer einen Hochspannungsgenerator (35) mit elektrischen Versorgungsleitungen (55), einen Versorgungsschaltkreis (22), der mit dem Körper (1) des Gassparers verbunden ist, einen Ein-/Ausschalter (34), der auf einer der Versorgungsleitungen (55) des Generators (35) angeordnet ist, eine Verzögerung, die auf einem elektrischen Zweig (54) des Versorgungsschaltkreises (22) eingerichtet ist, und einen Ein-/Ausschalter, der funktional mit dem beweglichen Element des Brennerträgers verbunden ist, aufweist, wobei sich die Verzögerung (29) stromabwärts des Ein-/Ausschalters (10), der funktional mit dem mobilen Element (6) verbunden ist, befindet,
- dass das Zündorgan (13) mit dem Hochspannungsgenerator (35) verbunden ist, der durch den elektrischen Versorgungsschaltkreis (22) mit der Verbindung verbunden ist, die über den Ein-/Ausschalter (34), der auf der elektrischen Versorgungsleitung (55) des Generators (35) angeordnet ist, unterbrochen ist, wobei der Ein-/Ausschalter (34) von der Verzögerung (29) gesteuert ist.

2. Gassparer nach Anspruch 1, **dadurch gekennzeichnet, dass** der Versorgungsschaltkreis elektrische Zweige (52, 53) aufweist, in welchen Magnetschieber (14, 15) eingerichtet sind, die mit den Verbindungsorganen (17, 18) verbunden sind, wobei die Verbindungsorgane (17, 18) außerhalb des Körpers des Gassparers liegen.

3. Gassparer nach Anspruch 1, **dadurch gekennzeichnet, dass** der Versorgungsschaltkreis (22) einen Haupt-Versorgungs-Ein-/Ausschalter (23) und stromabwärts von diesem einen Sicherheits-Ein-/Ausschalter (26) aufweist, der stromaufwärts des Ein-/Ausschalters (10) eingerichtet ist, der funktional mit dem beweglichen Element (6) des Trägers (5) des Brenners (30) verbunden ist.

4. Gassparer nach Anspruch 1, **dadurch gekennzeichnet, dass** der Versorgungsschaltkreis (22) ein Verzögerungsorgan aufweist, um zeitlich den Eingriff der Magnetschieber (14, 15) auf den Leitungen, mit denen sie jeweils verbunden sind, zu differenzieren.

5. Gassparer nach Anspruch 1, **dadurch gekennzeichnet, dass** das Zündorgan (13) und der Träger (5) des Brenners (30) mit einem gleichen Teil (3) des Körpers (1) des Gassparers verbunden sind.

6. Gassparer nach Anspruch 1, **dadurch gekennzeichnet, dass** das Zündorgan (13) autonom mit dem Körper (1) des Gassparers in Bezug auf den Träger des Brenners verbunden ist.

7. Gassparer nach Anspruch 1, **dadurch gekennzeichnet, dass** der Teil (3), mit dem das Zündorgan (13) und der Träger (5) des Brenners (3) verbunden sind, in Bezug auf den Körper (1) des Gassparers beweglich sind.

8. Gassparer nach Anspruch 1, **dadurch gekennzeichnet, dass** der Körper (1) des Gassparers eine Entladeleitung der Gase nach außen aufweist, die in den Leitungen, auf welchen die Magnetschieber (14, 15) angeordnet sind, zirkulieren.

9. Gassparer nach Anspruch 1, **dadurch gekennzeichnet, dass** der Körper (1) ein innen hohler Kasten ist und eine bewegliche Luke (2) zum Schließen seines Hohlraums aufweist.

10. Gassparer nach den Ansprüchen 3 bis 9, **dadurch gekennzeichnet, dass** der Haupt-Ein-/Ausschalter (23) und der Sicherheits-Haupt-Ein-/Ausschalter (26) außerhalb am Kastenkörper (1) oder seiner Luke eingerichtet sind.
